# FASCICULE DE BREVET EUROPEEN

(11) **EP 1 395 990 B1**
(45) Date de publication et mention de la délivrance du brevet: **02.11.2005**
(21) Numéro de dépôt: 02735555.1
(22) Date de dépôt: 22.05.2002
(51) Int. Cl.: G11B 33/04

(54) **CONDITIONNEMENT POUR SUPPORT D'INFORMATIONS EN FORME DE DISQUE**
VERPACKUNG FÜR PLATTENFÖRMIGEN INFORMATIONSTRÄGER
PACKAGING FOR DISC MEDIA

(30) Priorité: 22.05.2001 FR 0106727
(43) Date de publication de la demande: 10.03.2004
(73) Titulaire: Moulage Industriel de Perseigne "MIP", 72600 Mamers (FR)
(72) Inventeur: CROUAN, Alain, F-72000 Le Mans (FR)
(74) Mandataire: Breese, Pierre
(86) Numéro de dépôt international: PCT/FR2002/001724
(87) Numéro de publication internationale: WO 2002/095755

(56) Documents cités:
- EP-A- 1 005 045
- FR-A- 2 730 087
- US-A- 4 199 061
- US-A- 4 588 321
- US-A- 4 778 047
- US-A- 5 193 681
- US-A- 5 513 749
- US-A- 5 769 217
- US-A- 5 799 782
- US-A- 6 092 650

## Description

La présente invention a pour objet un emballage, coffret ou conditionnement de disques en vue de leur transport, leur protection et de leur stockage et en particulier, mais non exclusivement, de disques optonumériques à lecture par laser.

On sait que de tels supports d'informations, par leur capacité à mémoriser un très grand nombre de données, se développent très rapidement qu'il s'agisse de DVD vidéo ou audio, de CD-ROM, CD-RAM, CD audio etc.

Différents conditionnements de stockage et de protection ont déjà été proposés ou sont actuellement utilisés. Les plus courants sont constitués par des coffrets transparents généralement en polystyrène comprenant un support adapté pour recevoir un disque, ce support pouvant être fermé par un couvercle articulé sur un bord du support.

Pour diminuer le coût de l'emballage, il a déjà été proposé de regrouper plusieurs disques à l'intérieur d'un même coffret en matière plastique transparente. Il est également connu de remplacer la matière plastique par un carton pouvant être facilement imprimé le disque étant inclus soit dans une poche, soit par un support plastique avec rosace centrale comme dans les coffrets antérieurs.

Or, plus le coffret contient de disques, plus le besoin de documents imprimés est important, afin de donner accès à l'information nécessaire sans avoir à effectuer le tirage sur imprimante, dans le cas d'une utilisation sur ordinateur. De sorte que le livret d'accompagnement qui doit souvent être en plusieurs langues est d'une épaisseur croissante. Or le disque est, par essence, plat et peu épais.

Le document US 4 199 061A décrit le préambule de la revendication 1.

Un premier objet de l'invention est de pallier cet inconvénient et de permettre l'introduction à l'intérieur du coffret le montage d'un livret même épais.

Un second objet de l'invention est de permettre l'extraction du livret de manière simple ou sa consultation à l'intérieur du coffret, la pose de ce livret à l'intérieur du coffret pouvant être effectuée automatiquement.

Selon l'invention, le coffret, notamment pour disques optonumériques comprenant au moins un support de disque, une couverture rabattable présentant un dos et deux volets articulés de deux côtés du dos, l'un des volets au moins étant au-dessus du support, est caractérisé en ce qu'il comprend, sur le support ou sur une face interne du dos, des moyens de solidarisation amovible d'un livret présentant des oeillets, avec le support, à l'intérieur du coffret.

Par solidarisation amovible, on entendra la disposition selon laquelle le livret est normalement maintenu et peut être consulté dans le coffret mais peut en être extrait en vue d'en faciliter la lecture. Le livret est muni d'oeillets constitués de boucles métalliques faisant saillie par rapport à la tranche du livret, ces oeillets étant insérés dans lesdits moyens.

Selon une autre caractéristique de l'invention, dans le cas où le support est articulé sur le dos, les moyens de solidarisation sont formés dans un rail d'articulation, rigidement lié à ladite face interne du dos.

D'autres caractéristiques et avantages de l'invention apparaîtront au cours de la description qui va suivre d'un mode particulier de réalisation, donné uniquement à titre d'exemple non limitatif, en regard des dessins qui représentent :
- la figure 1, une vue en perspective d'un premier mode de réalisation;
- les figures 1A et 1B des vues de détails;
- la figure 2, un second mode de réalisation dans lequel le livret est articulé sur le support fixe de disque, la figure 2A étant une vue de détail;
- la figure 3, un autre mode de réalisation, la figure 3A étant une vue de détail de l'accrochage.

Les exemples représentés représentent un coffret du type CD audio, mais, bien entendu, l'invention s'applique à tout autre format et notamment aux coffrets ou emballages au format cassette vidéo. Sur l'ensemble des figures, les mêmes références désignent les mêmes éléments.

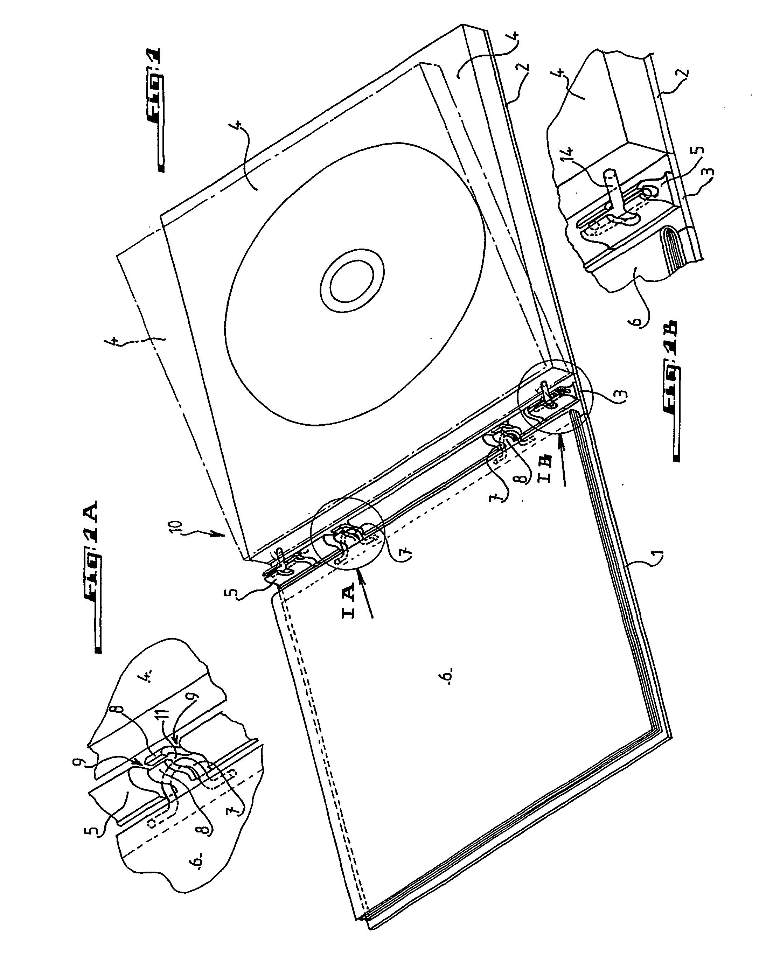

Sur la figure 1, on voit que le coffret désigné d'une manière générale par la référence 10 présente une couverture constituée d'un dos 3 et volets 1 et 2 rabattables l'un sur l'autre au moyen de deux lignes de moindre épaisseur constituant des charnières formées entre les volets 1 et 2 et deux côtés opposés du dos 3 du coffret. La couverture est de préférence en carton ce qui permet d'imprimer et de décorer ses quatre faces.

Dans l'exemple représenté sur la figure 1, un rail 5 d'articulation du support de disque 4 est collé contre la surface interne du dos 3 de la couverture. Cette disposition permet, comme en soi connu, de disposer deux disques respectivement sur le recto et le verso d'un support unique 4, plusieurs supports pouvant être ainsi montés dans le coffret, la largeur du dos étant prévue en conséquence pour que les volets 1 et 2 se replient à plat, parallèlement l'un à l'autre.

Dans le coffret est également monté un livret 6 qui est normalement appliqué contre la face interne du volet 1. Le livret 6 comprend généralement plusieurs feuilles pliées en deux et glissées les unes dans les autres. Les lignes de pliage de ces feuilles sont toutes disposées le long du dos 3 quand le livret 6 et monté dans le coffret. Ces lignes de pliage constituent la tranche du livret 6. Le livret 6 comprend également des oeillets 7 qui, dans l'exemple représenté, sont au nombre de 2.

Ces oeillets 7 sont formés de tiges métalliques pliées de quelques dixièmes de millimiètres de diamètre. Ces tiges présentent chacune des parties d'extrémité opposées droites, reliées par une partie centrale en U.

Les parties d'extrémité sont insérées dans la tranche du livret 6, les parties centrales en U faisant saillie par rapport à la tranche du livret 6.

Dans une variante de réalisation, les oeillets 7 peuvent être formés par pliage d'un même fil métallique.

Comme cela apparaît sur la figure 1A, un oeillet 7 est introduit dans une pince 8 formée par moulage dans un créneau 9 du rail 5. À l'état de repos, les mâchoires de la pince 8 sont éloignées d'une distance inférieure au diamètre du fil constituant l'oeillet 7. Lors du montage du livret dans le coffret, une pression exercée sur le livret et par suite sur l'oeillet écarte les mâchoires qui se referment après passage du fil. Dans l'exemple représenté sur la figure 1, les pinces 8 sont au nombre de deux, mais il est possible de prévoir un nombre supérieur lorsque le coffret n'est pas carré mais rectangulaire.

Un espace 11 est prévu entre les mâchoires de la pince 8 permettant au livret de prendre la position représentée sur la figure 1, soit après un pivotement de 180° de venir, toujours à plat, contre la face accessible du support 4, le livret pouvant ainsi être lu sans le détacher du coffret. Cet espace 11 permet un débattement de la partie supérieure de l'oeillet 7 pour qu'une position à plat soit du livret, soit d'une partie des pages puisse toujours être obtenue. Par contre, le livret 6 peut être extrait du coffret en l'amenant dans une position perpendiculaire au plan du coffret et en tirant ce qui permet aux oeillets d'échapper aux pinces.

Comme cela est représenté sur la figure 1B, le rail 5 présente une rainure longitudinale dans laquelle viennent se clipser des tétons 14 de pivotement. C'est-à-dire que la face supérieure (sur la figure) du support 4 peut venir s'appliquer contre la couverture du livret 6.

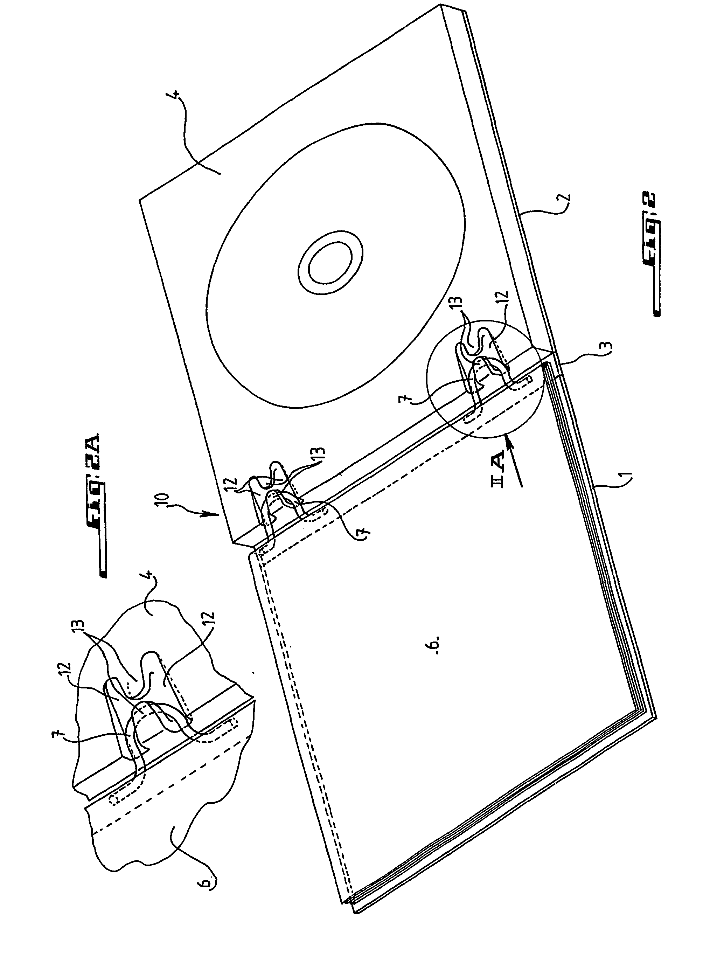

Dans le cas où le support de disque est collé sur la face interne de l'un des volets de la couverture, par exemple sur le volet 2, les oeillets doivent venir de fixer, toujours de manière amovible sur le support lui-même. À cet effet, sont prévus des embrèvements 12 dans le support 4. Sur la figure 2, des languettes 13 s'étendent au-dessus de la cavité 12, la distance de leurs sommets opposés étant, comme précédemment, inférieure au diamètre du fil constituant les oeillets 7 de manière à former un point dur lors de l'insertion des oeillets dans les cavités 12. Une fois ce point franchi, les oeillets 7 jouissent d'une certaine liberté à l'intérieur des cavités 12. Les languettes 13 restent toutefois à un niveau inférieur à celui de la surface du support.

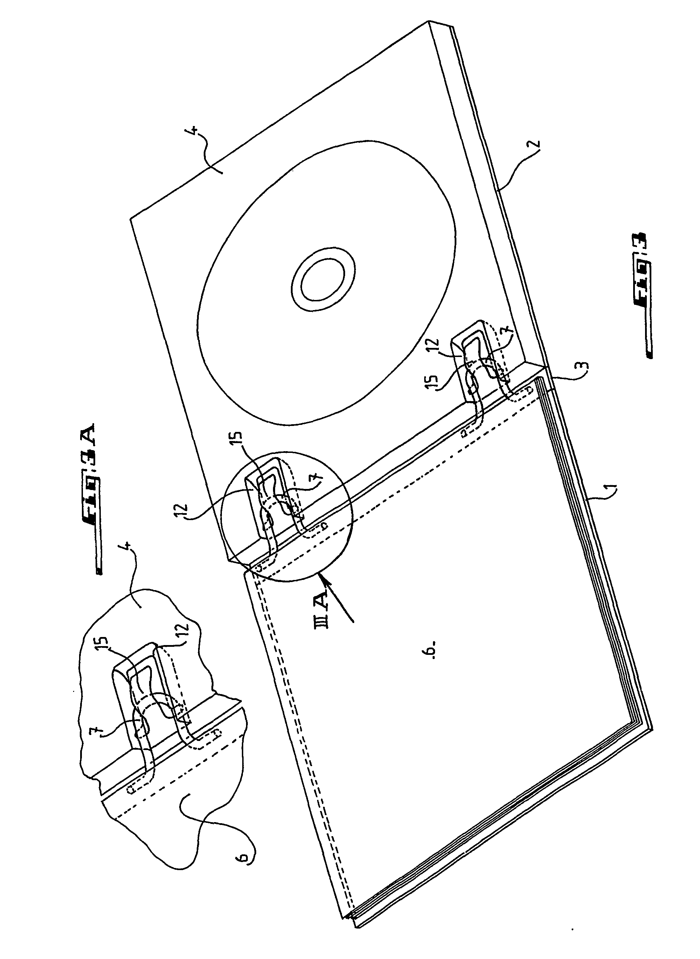

Dans le mode de réalisation représenté sur la figure 3 et sur la vue de détail 3A, les deux languettes 13 ont été remplacées par une languette unique 15 en saillie à l'intérieur de l'évidemment 12, mais toujours au-dessous du plan supérieur du support 4. Dans ces conditions, l'insertion des oeillets doit être effectuée latéralement à la languette et non plus perpendiculairement aux mâchoires.

Bien que la description qui précède ait été donnée en prenant pour exemple un boîtier carré, elle peut, bien entendu, être mise en oeuvre avec un coffret rectangulaire ou de toute autre forme. De même, l'accrochage du livret peut être effectué sur un côté quelconque du support de disques ou sur un rail parallèle à la direction longitudinale du coffret dans le cas d'un coffret rectangulaire. On peut, par exemple accrocher une première partie du livret sur le bord supérieur du support et une seconde partie sur le côté droit de celui-ci, les épaisseurs étant, bien entendu, adaptées pour que l'ensemble se replie à plat à l'intérieur de la couverture.

Il va de soi que de nombreuses variantes peuvent être apportées, notamment par substitution de moyens techniques équivalents, sans sortir pour cela du cadre de l'invention comme défini par les revendications.

## Revendications

1. Conditionnement, notamment pour disques optonumériques, comprenant au moins un support de disque (4), une couverture présentant un dos (3) et deux volets (1,2) articulés de deux côtés opposés du dos (3), l'un des volets (1, 2) au moins étant rabattable au-dessus du support (4) **caractérisé en ce qu'**il comprend, sur le support (4), ou sur une face interne du dos (3), des moyens de solidarisation amovible d'un livret (6), présentant des oeillets (7), avec le support ou avec la couverture, à l'intérieur du coffret (10).

2. Conditionnement selon la revendication 1, **caractérisé en ce que**, dans le cas où le support (4) est articulé sur le dos (3), les moyens de solidarisation sont formés dans le rail d'articulation (5) rigidement lié à ladite face interne du dos (3).

3. Conditionnement selon la revendication 2, **caractérisé en ce que** le rail d'articulation (5) présente au moins un créneau (9) dans lequel font saillie deux mâchoires élastiques d'une pince (8), espacées d'une distance inférieure au diamètre du fil constituant un oeillet (7) en saillie par rapport au livret (6).

4. Conditionnement selon la revendication 1, **caractérisé en ce que** des cavités (12) sont formées dans le bord du support de disque (4), l'extrémité supérieure des oeillets (7) pénétrant à l'intérieur desdites cavités en forçant un moyen de retenue (13,15).

5. Conditionnement selon la revendication 4, **caractérisé en ce que** le moyen de retenue est constitué par deux languettes (13) parallèles au plan du support (4), à l'intérieur de la cavité (12).

6. Conditionnement selon la revendication 4, **caractérisé en ce que** le moyen de retenue est constitué par une languette (15) en saillie à l'intérieur de chaque cavité (12).

7. Conditionnement selon les revendication 1 et 2, **caractérisé en ce que** la couverture comprend au moins deux volets (1,2) articulés sur un dos (3), le rail (5) étant collé sur la face interne du dos.

8. Conditionnement selon la revendication 1, **caractérisé en ce que** la couverture est réalisée en carton, les supports de disque étant en matière plastique.

## Patentansprüche

1. Verpackung, besonders für optisch digitale Scheiben, bestehend aus mindestens einem Scheibenhalter (4), einem Deckel mit einem Rückenteil (3) und zwei Klappen (1, 2), welche auf zwei dem Rückenteil (3) gegenüberliegenden Seiten beweglich angeordnet sind, wobei mindestens einer der beiden Klappen (1, 2) über den Halter (4) zusammenklappbar ist, **dadurch gekennzeichnet, dass** sie auf dem Halter (4) oder auf einer Innenseite des Rückenteils (3) lösbare Befestigungsmittel für ein Begleitheft (6) mit Ösen (7) an den Halter oder an den Deckel im Inneren des Kästchens (10) aufweist.

2. Verpackung nach dem Anspruch 1, **dadurch gekennzeichnet, dass** in dem Fall, in dem der Halter (4) auf dem Rückenteil (3) beweglich angeordnet ist, die Befestigungsmittel in der Anlenkschiene (5) gebildet sind, steif mit der besagten Innenseite des Rückenteils (3) verbunden.

3. Verpackung nach Anspruch 2, **dadurch gekennzeichnet, dass** die Anlenkschiene (5) mindestens eine Lücke (9) aufweist, in welche zwei elastische Backen einer Zange (8) hereinragen, die zu einer Entfernung, die kleiner ist als der Durchmesser des eine Öse (7) bildenden Fadens ist, beabstandet sind, bezüglich des Begleithefts (6) überkragend.

4. Verpackung nach Anspruch 1, **dadurch gekennzeichnet, dass** Hohlräume (12) in dem Rand des Scheibenhalters (4) gebildet sind, wobei das obere Ende der Ösen (7) in das Innere der besagten Hohlräume eindringt, indem ein Zurückhaltungsmittel (13, 15) forciert wird.

5. Verpackung nach Anspruch 4, **dadurch gekennzeichnet, dass** das Zurückhaltungsmittel aus zwei zu der Halterebene (4) parallelen Zungen (13), im Inneren des Hohlraums (12) besteht.

6. Verpackung nach Anspruch 4, **dadurch gekennzeichnet, dass** das Zurückhaltungsmittel aus einer in das Innere von jedem Hohlraum (12) auskragenden Zunge (15) besteht.

7. Verpackung nach Ansprüchen 1 und 2, **dadurch gekennzeichnet, dass** der Deckel aus mindestens zwei auf einem Rückenteil (3) beweglich angeordneten Klappen (1,2) besteht, wobei die Schiene (5) auf die Innenseite des Rückenteils aufgeklebt ist.

8. Verpackung nach Anspruch 1, **dadurch gekennzeichnet, dass** der Deckel aus Pappkarton gefertigt ist, wobei die Scheibenhalter aus Kunststoff bestehen.

## Claims

1. Packaging, in particular for opto-digital discs, comprising at least one disc support (4), a cover with a back (3) and two flaps (1, 2) articulated on two opposite sides of the back, where one of the flaps (1, 2) at least is capable of being folded over the support (4), **characterised in that** it comprises, on the support (4), or on an inside face of the back (3), detachable means of attaching a booklet (6), with eyelets (7), to the support or the cover, inside of the casing (10).

2. Packaging of claim 1, **characterised in that**, in the case of the support (4) is articulated on the back (3), the attachment means are formed in the articulation rail (5) and are rigidly connected to the inside face of the back (3).

3. Packaging of claim 2, **characterised in that** the articulation rail (5) has at least one notch (9) in which protrude two elastic jaws of a clip (8), spaced at a distance of less than the diameter of the wire forming an eyelet (7), protruding with respect to the booklet (6).

4. Packaging of claim 1, **characterised in that** cavities (12) are formed in the edge of the disc support (4), the upper end of the eyelets (7) penetrating the said cavities by forcing a means of retention (13, 15).

5. Packaging of claim 4, **characterised in that** the means of retention is composed of two tabs (13) parallel to the support (4) plane inside the cavity (12).

6. Packaging of claim 4, **characterised in that** the means of retention is composed of a tab (15) protruding inside of each cavity (12).

7. Packaging of claims 1 and 2, **characterised in that** the cover comprises at least two flaps (1, 2) articulated on a back (3), in which the rail (5) is glued to the inside face of the back.

8. Packaging of claim 1, **characterised in that** the cover is made of card, and the disc supports made of plastic.
